# EUROPÄISCHE PATENTSCHRIFT

(11) **EP 3 539 802 B1**
(45) Veröffentlichungstag und Bekanntmachung des Hinweises auf die Patenterteilung: **01.12.2021**
(21) Anmeldenummer: 18162013.9
(22) Anmeldetag: 15.03.2018
(51) Int. Cl.: B60G 7/00

(54) **QUERLENKER IN SCHALENBAUWEISE FÜR EINE RADAUFHÄNGUNG**
TRANSVERSE ARM WITH SHELL CONSTRUCTION FOR A WHEEL SUSPENSION
BRAS OSCILLANT TRANSVERSAL À STRUCTURE À COQUE POUR UNE SUSPENSION DE ROUE

(43) Veröffentlichungstag der Anmeldung: 18.09.2019
(73) Patentinhaber: Autotech Engineering Deutschland GmbH, 33647 Bielefeld (DE); Autotech Engineering S.L., 48340 Amorebieta-Etxano (ES); Gestamp Umformtechnik GmbH, 33647 Bielefeld (DE); Gestamp Tallent Ltd, CO Durham DL5 6EP (GB)
(72) Erfinder: Frenzel, Oliver, 48336 Sassenberg (DE); Groß, Thomas, 33335 Gütersloh (DE); Schaab, Juri, 32139 Spenge (DE)
(74) Vertreter: Cohausz & Florack

(56) Entgegenhaltungen:
- EP-A1- 1 619 054
- DE-A1- 10 011 845
- DE-A1- 10 311 211
- DE-A1-102010 028 400
- DE-U1-202017 100 162
- JP-A- S5 867 507
- JP-A- H11 115 429
- KR-B1- 101 338 968
- US-A1- 2012 098 228

## Beschreibung

Die Erfindung betrifft einen Querlenker in Schalenbauweise für eine Radaufhängung, mit mindestens drei Schalenteilen, die miteinander zu einem Hohlkörper verschweißt sind, der mindestens drei Lageranbindungsbereiche aufweist, wobei die mindestens drei Schalenteile als rinnenförmige Profilschalen ausgeführt sind.

Ein derartiger Querlenker ist aus der JP S58 67507 A bekannt.

Aus dem Stand der Technik ist es bekannt, Fahrwerkslenker als Gussbauteile oder als Blechbauteile herzustellen. Bei den als Blechbauteil ausgeführten Fahrwerkslenkern sind sowohl in einschaliger als auch in mehrschaliger Blechbauweise ausgeführte Querlenker bekannt (siehe z.B. DE 10 2007 018 569 A1 und DE 100 11 845 A1).

Die DE 100 11 845 A1 offenbart einen Querlenker in Schalenbauweise für eine Radaufhängung, der ein erstes Schalenteil und ein zweites Schalenteil umfasst, die mit ihren Außenrändern zu einem Hohlkörper zusammengefügt sind. Dabei ist zwischen zwei einander gegenüberliegenden Außenrandabschnitten des ersten und zweiten Schalenteils ein drittes Schalenteil eingefügt. Das erste und das zweite Schalenteil sind als Ober- und Unterschale ausgebildet, während das dritte Schalenteil streifenförmig ausgebildet ist. Die Verbindung der Schalenteile besteht aus Schweißverbindungen. Dieser Querlenker soll mit einem geringen Gewicht und einer hohen Tragfähigkeit einfach herstellbar sein.

Die DE 20 2017 100 162 U1 zeigt ebenfalls einen Querlenker in Schalenbauweise für eine Radaufhängung eines Fahrzeugs. Der Querlenker ist als Hohlkörper ausgeführt und aus einem oberen Schalenteil und einem unteren Schalenteil aufgebaut, wobei sich ein Randabschnitt wenigstens eines der Schalenteile zumindest teilweise in den Hohlraum des aus den Schalenteilen gebildeten Hohlkörpers hinein erstreckt und dort einen Verstärkungsflansch ausbildet. Auch bei diesem bekannten Querlenker sind alle den Hohlkörper bildenden Schalenteile an ihren Außenrändern zusammengefügt, beispielsweise miteinander verschweißt, so dass die Fügenaht (Schweißnaht) im seitlichen Kantenbereich des Querlenkers liegt.

Des Weiteren ist aus der DE 103 11 211 A1 ein Querlenker für eine Radaufhängung bekannt, der mindestens zwei Schalenelemente, die zu einem Hohlkörper zusammengefügt sind, und Lageraufnahmen für Lager zur Anbindung an einem Fahrzeugaufbau und einem Radträger umfasst. Eine Lageraufnahme ist dabei integral mit mindestens einem der Schalenelemente ausgebildet. Auch bei diesem bekannten Querlenker sind die Schalenteile an ihren Außenrändern zusammengefügt, so dass die Fügenaht (Schweißnaht) im seitlichen Kantenbereich des Querlenkers liegt.

Bei solchen herkömmlichen Querlenkern, die aus einer Oberschale und einer Unterschale zusammengesetzt sind, wobei die Schweißverbindung an den Außenkanten (Randfasern) des Hohlkörpers verläuft, besteht das Problem, dass aufgrund des Beschnitts der Schalenteile an den äußeren Randbereichen des Querlenkers scharfe Kanten entstehen, die bei der radseitigen Anbindung zusätzlichen Bauraum für einen Reifenfreigang beanspruchen. Zudem besteht das Problem, dass die äußeren Randbereiche des Querlenkers und damit die Schweißnähte im Fahrbetrieb des Kraftfahrzeuges hohen Belastungen (Spannungen) unterworfen sind.

Die Schweißnähte und die Blechdicke der Schalenteile dieser herkömmlichen Querlenker müssen daher entsprechend dick dimensioniert werden, was nachteilig hinsichtlich des Gewichts des Querlenkers ist.

Die JP S58 67507 A zeigt einen Querlenker für eine Radaufhängung, der aus einem inneren Armelement, einem äußeren Armelement und einem Verstärkungselement besteht. Die beiden Armelemente sind als rinnenförmige Profilschalen ausgebildet und entlang einer bestimmten Länge durch Lichtbogenschweißen miteinander zu einem Y-förmigen Körper verbunden. Die beiden Armelemente definieren jeweils einen äußeren, im Querschnitt betrachtet U-förmigen Kantenabschnitt des Körpers.

Das Verstärkungselement ist ein gebogenes Blechteil und durch Punktschweißen mit den Armelementen verbunden, wobei es an einer Stelle des Körpers angeordnet ist, an welcher die beiden Armelemente voneinander bidirektional getrennt sind.

Davon ausgehend liegt der Erfindung die Aufgabe zugrunde, einen Querlenker für eine Fahrzeugradaufhängung zu schaffen, der eine verbesserte Bauraumnutzung an der radseitigen Anbindung im Reifenbereich ermöglicht und bei geringem Bauteilgewicht dennoch die geforderte Festigkeit und Steifigkeit bietet.

Gelöst wird diese Aufgabe durch einen Querlenker mit den in Anspruch 1 angegebenen Merkmalen. Bevorzugte und vorteilhafte Ausgestaltungen des erfindungsgemäßen Querlenkers sind in den Unteransprüchen angegeben.

Der erfindungsgemäße Querlenker ist dadurch gekennzeichnet, dass jede der mindestens drei Profilschalen einen äußeren, im Querschnitt betrachtet U-förmigen Kantenabschnitt des Hohlkörpers definiert, wobei je zwei der mindestens drei rinnenförmigen Profilschalen einen der mindestens drei Lageranbindungsbereiche bilden.

Durch die Verwendung von mindestens drei rinnenförmigen Profilschalen werden im Unterschied zu den oben genannten herkömmlichen Querlenkern die Schweißnähte von den äußeren Randbereichen des Querlenkers an die Oberseite und die Unterseite des Querlenkers verlegt, wo die im Fahrbetrieb des Kraftfahrzeuges auftretenden Belastungen und Spannungen deutlich geringer sind als an den äußeren Randbereichen. Anders ausgedrückt werden die Schweißnähte aus hochbeanspruchten Bereichen des Querlenkers in deutlich weniger beanspruchte Bereiche gelegt. Die im Fahrbetrieb des Kraftfahrzeuges auftretenden Belastungen und Spannungen der äußersten Randfaser liegen somit im Material der rinnenförmigen Profilschalen, und zwar im Material ihrer gebogenen Kanten, das eine deutliche höhere Festigkeit als eine Schweißnaht aufweist. Dies schafft die Möglichkeit, unter Einhaltung der geforderten Festigkeit und Steifigkeit des Querlenkers die Materialdicke (Blechdicke) und auch die Schweißnahtdicke zu reduzieren und somit das Gewicht des Querlenkers entsprechend zu reduzieren.

Gleichzeitig fallen durch die rinnenförmigen Profilschalen die scharfen Kanten an den äußeren Randbereichen des Querlenkers weg, so dass eine verbesserte Bauraumnutzung an der radseitigen Anbindung im Reifenbereich ermöglicht wird.

Nach einer vorteilhaften Ausgestaltung der Erfindung liegen die die Profilschalen verbindenden Schweißnähte zumindest entlang eines Abschnitts ihrer Länge in einer oder mehreren neutralen Fasern des Querlenkers. Hierdurch können unter Einhaltung der geforderten Festigkeit und Steifigkeit des Querlenkers die Dicke der Schweißnähte sowie die Materialdicke der rinnenförmigen Profilschalen weiter reduziert bzw. minimiert werden. Denn in der neutralen Faser sind die Zugspannung sowie die Druckspannung gleich Null. Vorzugweise liegen die Schweißnähte aller Profilschalen des erfindungsgemäßen Querlenkers jeweils in dessen neutralen Faser/n.

Eine bevorzugte Ausgestaltung der Erfindung sieht vor, dass die Profilschalen im Stumpfstoß miteinander verschweißt sind. Hierdurch kann das Gewicht des Querlenkers weiter reduziert bzw. minimiert werden.

Nach einer weiteren bevorzugten Ausgestaltung der Erfindung sind die Fügestoßkanten der Profilschalen als stetig verlaufende Kanten ausgebildet. Dementsprechend ergeben sich dann an den Fügestoßkanten stetig verlaufende Schweißnähte.

Eine weitere vorteilhafte Ausgestaltung der Erfindung ist dadurch gekennzeichnet, dass einer der Lageranbindungsbereiche in Form eines Lagerbolzens ausgeführt ist, wobei zwei der rinnenförmigen Profilschalen den Lagerbolzen bilden. Der Lagerbolzen ist somit in den beiden rinnenförmigen Profilschalen integriert, wodurch sich die Anzahl der zusammenzufügenden Einzelteile des Querlenkers um wenigstens ein Einzelteil reduziert. Zudem schafft diese Ausgestaltung der Erfindung die Möglichkeit, Schweißnähte im Übergangsbereich zu dem Lagerbolzen zu vermeiden. In besagtem Übergangsbereich können im Fahrbetrieb eines mit dem Querlenker ausgestatteten Kraftfahrzeugs erhebliche Spannungen auftreten, welche die Lebensdauer einer dort angeordneten Schweißnaht beeinträchtigen können. Der Lagerbolzen kann auch als Lagerzapfen bezeichnet werden.

In diesem Zusammenhang ist eine weitere vorteilhafte Ausgestaltung des erfindungsgemäßen Querlenkers dadurch gekennzeichnet, dass die Schweißnähte im Bereich des Lagerbolzens an dessen Oberseite und Unterseite sowie im Wesentlichen parallel zu dessen Mittelachse verlaufen. Die Schweißnähte liegen somit in den weniger oder kaum beanspruchten Bereichen des Lagerbolzens.

Eine weitere vorteilhafte Ausgestaltung des erfindungsgemäßen Querlenkers sieht vor, dass an einem der Lageranbindungsbereiche, vorzugsweise einem radträgerseitigen Lageranbindungsbereich, ein Kugelgelenklager angebunden ist. Besonders bevorzugt ist dabei das Gehäuse des Kugelgelenklagers mit den beiden Profilschalen, die den radträgerseitigen Lageranbindungsbereich bilden, verschweißt. Die Schweißverbindung bietet im Vergleich zu einer herkömmlichen Anbindung des Kugelgelenklagers mittels Schrauben eine erhebliche Gewichtseinsparung.

Die beiden Profilschalen, an denen das Gehäuse des Kugelgelenklagers angebunden ist, weisen nach einer weiteren vorteilhaften Ausgestaltung der Erfindung jeweils ein im Wesentlichen flach ausgebildetes Ende mit einer Aufnahme für das Gehäuse des Kugelgelenklagers auf, wobei die flach ausgebildeten Enden beabstandet voneinander mit dem Gehäuse des Kugelgelenklagers verbunden sind. Hierdurch lässt sich eine besonders stabile Anbindung des Kugelgelenklagers an dem gewichtsreduzierten Querlenker erzielen.

Eine weitere Ausgestaltung des erfindungsgemäßen Querlenkers sieht vor, dass einer der Lageranbindungsbereiche, vorzugsweise ein radträgerseitiger

Lageranbindungsbereich, in Form eines Lagerauges ausgeführt ist, welches einen umlaufenden Durchzug aufweist. Der so ausgestaltete Lageranbindungsbereich ermöglicht ein Einpressen eines Lagers oder Lagerbauteils in den umlaufenden Durchzug des Lagerauges. Hierdurch lässt sich eine sehr stabile und dauerhafte Anbindung des Lagers oder Lagerbauteils an den Querlenker erzielen. Zusätzlich kann das in das Lagerauge eingepresste Lager oder Lagerbauteil durch eine Schweißverbindung, z.B. einen Schweißpunkt, an dem Lagerauge gesichert werden. Bei dem in das Lagerauge eingepressten Lagerbauteil kann es sich beispielsweise um ein Lagergehäuse eines Kugelgelenklagers handeln.

Nach einer weiteren bevorzugten Ausgestaltung des erfindungsgemäßen Querlenkers sind mindestens zwei seiner Profilschalen aus Metallblechen unterschiedlicher Blechdicke und/oder Materialgüte gefertigt. Hierdurch können bestimmte Abschnitte des Querlenkers, die im Fahrbetrieb unterschiedlich stark beansprucht werden, hinsichtlich einer Minimierung des Gesamtgewichts des Querlenkers optimal an die aufzunehmenden Kräfte bzw. Spannungen angepasst werden. Dementsprechend ist eine bevorzugte Ausgestaltung des erfindungsgemäßen Querlenkers dadurch gekennzeichnet, dass die beiden Profilschalen, welche einen radträgerseitigen Lageranbindungsbereich bilden, jeweils eine geringere Blechdicke aufweisen als eine dritte der drei Profilschalen, welche sich von einem ersten karosserieseitigen Lageranbindungsbereich zu einem zweiten karosserieseitigen Lageranbindungsbereich erstreckt.

Eine weitere vorteilhafte Ausgestaltung der Erfindung ist dadurch gekennzeichnet, dass mindestens zwei der Profilschalen, vorzugsweise alle Profilschalen, nach außen gebogene Randabschnitte aufweisen, die miteinander verschweißt sind und eine wulstförmige Erhebung bilden. Die nach außen gebogenen Randabschnitte versteifen die betreffenden Profilschalen. Dies ist insbesondere für die Herstellung der Schweißnaht von Vorteil, da durch die Versteifung der aneinander zu verschweißenden Randabschnitte ein beim Schweißen mitunter auftretender Verzug der Randabschnitte minimiert oder verhindert werden kann. Des Weiteren wird durch die nach außen gebogenen Randabschnitte der betreffenden Profilschalen sowie die wulstförmige Erhebung der Querlenker versteift, so dass die Blechdicke mindestens einer der betreffenden Profilschalen und damit das Gewicht des Querlenkers reduziert werden kann.

Nach einer weiteren bevorzugten Ausgestaltung des erfindungsgemäßen Querlenkers ist an einem der Lageranbindungsbereiche eine Lagerbuchse angeordnet, wobei die diesen Lageranbindungsbereich bildenden Profilschalen durch Schweißnähte miteinander verbunden sind, die quer zur Mittelachse der Lagerbuchse verlaufen. Diese Ausgestaltung trägt ebenfalls zu einer Verringerung des Gewichts des Querlenkers bei Sicherstellung einer ausreichend hohen Festigkeit und Steifigkeit des Querlenkers bei.

Eine weitere Ausgestaltung des erfindungsgemäßen Querlenkers ist dadurch gekennzeichnet, dass in seinem Hohlkörper eine Durchgangsöffnung vorgesehen ist, an der mindestens drei, vorzugsweise mindestens sechs der die Profilschalen verbindenden Schweißnähte enden. Anders ausgedrückt begrenzen die miteinander verschweißten rinnenförmigen Profilschalen die Durchgangsöffnung. Die Durchgangsöffnung verringert das Gewicht des Querlenkers und die Länge der herzustellenden Schweißnähte. Zudem verringert die Durchgangsöffnung die im Fahrbetrieb an den Schweißnähten mitunter auftretenden Spannungen, insbesondere Schubspannungen. Vorzugsweise weisen die Profilschalen an der Durchgangsöffnung in den Hohlkörper einwärts gebogene Kragenabschnitte auf, wobei sich die Kragenabschnitte vorzugsweise zu einem umlaufenden Kragen ergänzen, um Beschnittkanten- und Schweißnahtspannungen zu reduzieren.

Eine weitere Ausgestaltung des erfindungsgemäßen Querlenkers sieht vor, dass dessen Hohlkörper entlang der Schweißnähte der beiden Profilschalen, welche einen radträgerseitigen Lageranbindungsbereich bilden, einen gekröpften Hohlkörperabschnitt aufweist. Der gekröpften Hohlkörperabschnitt bewirkt eine Versteifung des Querlenkers, welche eine Reduzierung der Blechdicke mindestens einer der Profilschalen des Querlenkers und damit eine Reduzierung des Gewichts des Querlenkers ermöglicht.

Nachfolgend wird die Erfindung anhand einer ein Ausführungsbeispiel darstellenden Zeichnung näher erläutert. Es zeigen schematisch:
- Fig. 1: einen erfindungsgemäßen Querlenker in einer perspektivischen Darstellung;
- Fig. 2: den Querlenker aus Fig. 1 in einer Explosionsdarstellung;
- Fig. 3: den Querlenker aus Fig. 1 in Draufsicht;
- Fig. 4: eine Seitenansicht auf einen Abschnitt des Querlenkers aus Fig. 1, wobei dieser Abschnitt einen Lageranbindungsbereich zur Anbindung einer (hier nicht gezeigten) Buchse aufweist;
- Fig. 5: eine Querschnittansicht eines Lagerzapfens des Querlenkers entlang der Schnittlinie V-V in Fig. 3; und
- Fig. 6 bis 8: Querschnittansichten des Querlenkers entlang den Schnittlinien VI-VI, VII-VII und VIII-VIII in Fig. 3.

Der in der Zeichnung dargestellte Querlenker 1 ist L-förmig ausgebildet und hat die Grundform eines Dreiecks. Er ist beispielsweise als Vorderachsquerlenker für ein Kraftfahrzeug, insbesondere ein Personenkraftfahrzeug, ausgeführt. Er bildet ein Bindeglied zwischen der Karosserie des Kraftfahrzeuges einerseits und dynamisch beweglichen Teilen des Kraftfahrzeuges, insbesondere dem Radträger und einem Achsträger andererseits.

Der Querlenker 1 ist als dreischaliger Querlenker ausgeführt. Er ist aus drei rinnenförmigen Profilschalen 2, 3, 4 zusammengesetzt, die miteinander zu einem Hohlkörper 5 verschweißt sind. Der Hohlkörper 5 weist drei Lageranbindungsbereiche 6, 7, 8 auf, und zwar einen radträgerseitigen Lageranbindungsbereich 6 und zwei karosserieseitige Lageranbindungsbereiche 7, 8. Der radträgerseitige Lageranbindungsbereich 6 ist mit einem Kugelgelenklager 9 versehen, während an den karosserieseitigen Lageranbindungsbereichen 7, 8 eine Lagerbuchse 10 und ein Lagerzapfen oder Lagerbolzen 11 angeordnet sind. Die Lagerbuchse 10 und der Lagerbolzen (Lagerzapfen) 11 dienen der Aufnahme von gummielastischen Lagerbuchsen. Die Lagerbuchse 10 ist beispielsweise aus einem zylindrisch geformten Metallstreifen, vorzugsweise einem Stahlstreifen gebildet, wobei die Enden des Metallstreifens formschlüssig miteinander gekoppelte Verbindungselemente in Form von Ausnehmungen 10.1 und darin einsetzbaren Zungen 10.2 aufweisen.

Jede der rinnenförmigen Profilschalen 2, 3, 4 definiert einen äußeren, im Querschnitt betrachtet U-förmigen Kantenabschnitt 2.1, 3.1, 4.1 des Hohlkörpers 5, wobei die Profilschalen 2, 3, 4 jeweils paarweise die drei Lageranbindungsbereiche 6, 7, 8 bilden. Die Schweißnähte 12, 12', 13, 13', 14, 14' der Profilschalen 2, 3, 4 liegen im Wesentlichen oder weitgehend in den neutralen Fasern des Hohlkörpers 5 des Querlenkers 1. Die Schweißnähte 12, 12', 13, 13', 14, 14'verlaufen somit nicht wie bei herkömmlichen, aus Ober- und Unterschale zusammengefügten Querlenkern an den äußeren Kanten des Hohlkörpers, sondern an der Oberseite und an der Unterseite des Hohlkörpers 5, und dort vorzugsweise im Wesentlichen entlang oder weitgehend entlang den neutralen Fasern. Die Profilschalen 2, 3, 4 sind vorzugsweise im Stumpfstoß miteinander verschweißt.

Der Lagerbolzen (Lagerzapfen) 11 ist dabei durch die rinnenförmigen Profilschalen 2, 3 gebildet, wobei die Schweißnähte 12, 12' im Bereich des Lagerbolzens 11 an dessen Oberseite und Unterseite sowie im Wesentlichen parallel zu dessen Mittelachse verlaufen. Der Lagerbolzen 11, nämlich dessen Hälften sind somit einstückig mit den beiden Profilschalen 2, 3 ausgebildet.

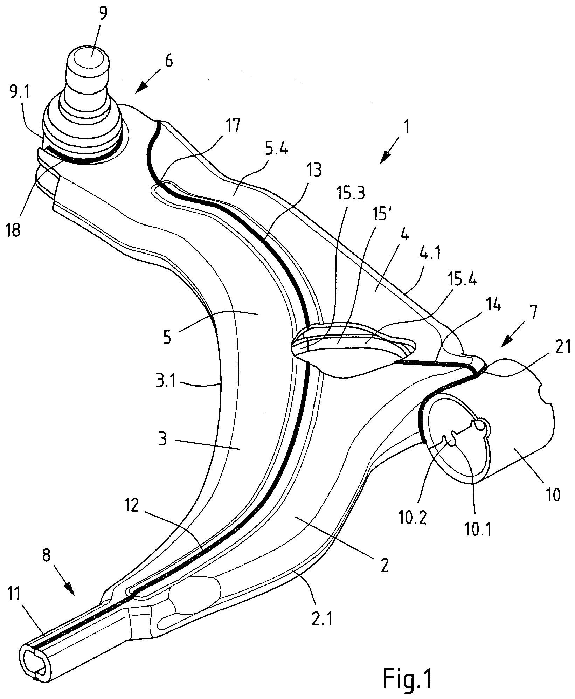

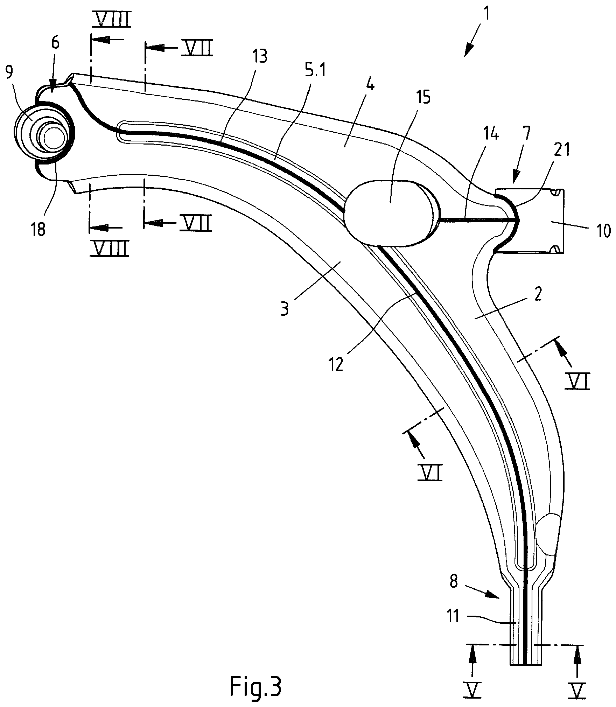

Des Weiteren sind die drei Profilschalen 2, 3, 4 dergestalt ausgebildet, dass sie im passend zusammengesetzten, miteinander verschweißten Zustand eine Durchgangsöffnung 15 begrenzen, an der die Schweißnähte 12, 12', 13, 13', 14, 14' enden. Die beiden Schweißnähte 12, 12' am Lagerbolzen 11 verlaufen zunächst entlang der Mittelachse des Lagerbolzens 11 im Wesentlichen geradlinig. Anschließend gehen sie in Richtung der Durchgangsöffnung 15 in eine Bogenform über und enden schließlich an der Durchgangsöffnung 15. Ferner erstrecken sich die Schweißnähte 13, 13' von der Durchgangsöffnung 15 in Richtung des radträgerseitigen Lageranbindungsbereichs 6. Diese Schweißnähte 13, 13' haben einen im Wesentlichen S-förmigen Verlauf. Die den Lageranbindungsbereich 7 für die Lagerbuchse 10 bildenden Profilschalen 2, 4 sind durch Schweißnähte 14, 14' miteinander verbunden, die quer zur Mittelachse der Lagerbuchse 10 verlaufen (vgl. Fig. 1 und 3).

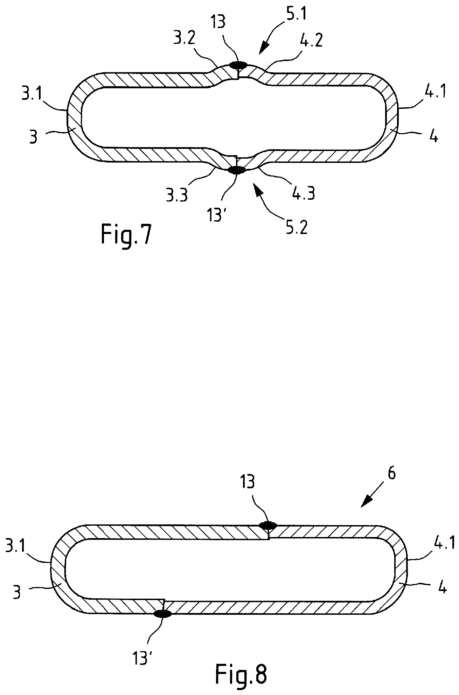

Die Profilschalen 2, 3, 4 weisen entlang der bogenförmigen Fügestöße, die sich von dem Lagerzapfen 11 bis zu der Durchgangsöffnung 15 und von der Durchgangsöffnung 15 bis zum Wechsel 17 der Kurvenrichtung erstrecken, nach außen gebogene Randabschnitte 2.2, 2.3, 3.2, 3.3, 4.2, 4.3 auf, die im miteinander verschweißten Zustand eine bogenförmige, wulstförmige Erhebung 5.1, 5.2 bilden (vgl. Fig. 1, 2, 3, 6 und 7). Ferner weisen die Profilschalen 2, 3, 4 an der Durchgangsöffnung 15 in den Hohlkörper 5 einwärts gebogene Kragenabschnitte 15.2, 15.3 auf, wobei sich die Kragenabschnitte 15.2, 15.3 zu einem umlaufenden Kragen 15' ergänzen.

Die jeweiligen Fügestoßkanten 20, 30, 40 der drei Profilschalen 2, 3, 4 sind vorzugsweise als stetig verlaufende Kanten ausgebildet (vgl. Fig. 1 bis 3).

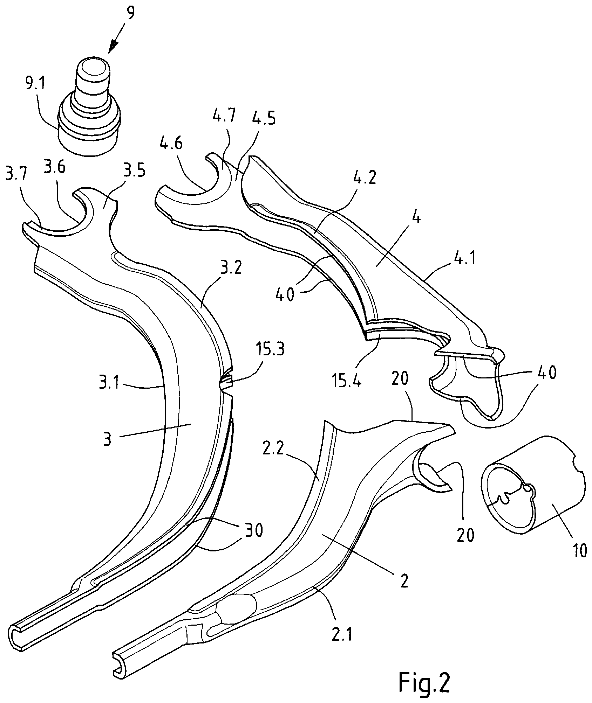

Des Weiteren lässt sich der Zeichnung entnehmen, dass die beiden rinnenförmigen Profilschalen 3, 4, an denen das Gehäuse 9.1 des Kugelgelenklagers 9 angebunden ist, jeweils ein im Wesentlichen flach ausgebildetes Ende 3.5, 4.5 mit einer Aufnahme für das Lagergehäuse 9.1 aufweisen, wobei die flach ausgebildeten Enden 3.5, 4.5 beabstandet voneinander mit dem Lagergehäuse 9.1 verbunden sind. Die das Lagergehäuse 9.1 aufnehmenden Enden 3.5, 4.5 der Profilschalen 3, 4 sind im Wesentlichen gabelförmig ausgebildet (Fig. 2). Der Innenrand der jeweiligen Aufnehmung, der beispielsweise im Wesentlichen halbrund ausgebildet ist, weist einen entlang des Innenrandes 3.6, 4.6 verlaufenden Absatz 3.7, 4.7 auf. Das Lagergehäuse 9.1 ist mit den beiden Profilschalen 3, 4 bzw. den Innenrändern 3.6, 4.6 verschweißt. Die Schweißnähte 18 sind entsprechend den Innenrändern 3.6, 4.6 im Wesentlichen halbrund ausgebildet (vgl. Fig. 1 und 3).

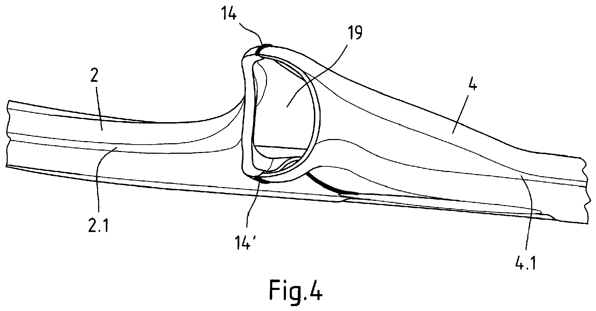

Die Lagerbuchse 10 ist mit den Profilschalen 2, 4, die im zusammengefügten Zustand eine mundförmige Lageranbindungsstelle 19 definieren, verschweißt. Die Schweißnaht 21 verläuft dabei vorzugsweise umlaufend entlang der mundförmigen Lageranbindungsstelle 19 (vgl. Fig. 1, 2 und 4).

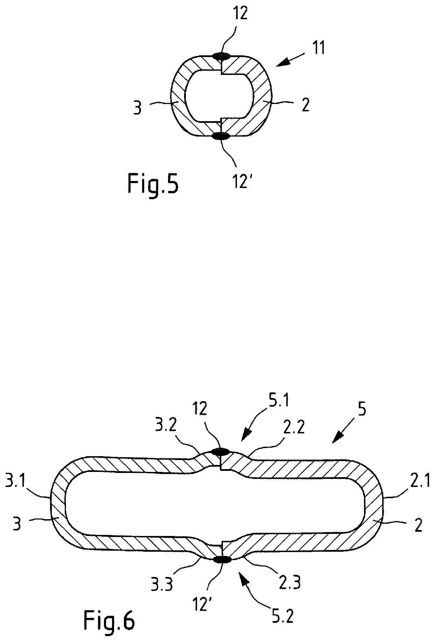

Die rinnenförmigen Profilschalen 2, 3, 4 sind aus Metallblechen, beispielsweise aus hochfestem Stahl, insbesondere aus Mehrphasen- oder Complexphasenstahl gefertigt, der beispielsweise eine Zugfestigkeit von mindestens 800 MPa und eine Streckgrenze von mindestens 680 MPa aufweist. Die Dicke der Stahlbleche liegt dabei beispielsweise im Bereich von ca. 3,0 bis 4,5 mm. Vorzugsweise haben die beiden Profilschalen 3, 4, welche den radträgerseitigen Lageranbindungsbereich 6 bilden, jeweils eine geringere Blechdicke als die dritte Profilschale 2, welche sich von dem Lagerzapfen 11 zu der Lagerbuchse 10 erstreckt. Beispielsweise beträgt die Blechdicke der karosserieseitigen Profilschale 2 ca. 4,5 mm, während die dem Reifen des Fahrzeugrades zugewandte Profilschale 3 einen Blechdicke von ca. 3,5 mm aufweist und die sich von der Lagerbuchse 10 zu dem radträgerseitigen Kugelgelenklager 6 erstreckende Profilschale 4 eine Blechdicke von ca. 3,0 mm aufweist. Die rinnenförmigen Profilschalen 2, 3, 4 sind vorzugsweise dergestalt ausgebildet, dass der durch die unterschiedlichen Blechdicken verursachte Dickensprung an dem jeweiligen Fügestoßes an der Innenseite des Hohlkörpers 5 des Querlenkers 1 liegt (vgl. Fig. 5 bis 8). Zusätzlich oder alternativ können sich die Metallbleche der Profilschalen 2, 3, 4 auch in ihrer Materialgüte, insbesondere der Zugfestigkeit voneinander unterscheiden.

Der Fig. 1 lässt sich ferner entnehmen, dass der Hohlkörper 5 des Querlenkers 1 entlang der Schweißnähte der beiden Profilschalen 3, 4, welche den radträgerseitigen Lageranbindungsbereich 6 bilden, einen gekröpften Hohlkörperabschnitt 5.4 aufweist. Der gekröpfte Hohlkörperabschnitt 5.4 verläuft entlang der wulstförmigen Erhebungen 5.1, 5.2 des Querlenkers 1 (vgl. 1, 3 und 7).

Die Ausführung der Erfindung ist nicht auf das in der Zeichnung dargestellte Ausführungsbeispiel beschränkt. Vielmehr sind zahlreiche Varianten denkbar, die auch bei einer von dem gezeigten Ausführungsbeispiel abweichenden Ausgestaltung von der in den beigefügten Ansprüchen angegebenen Erfindung Gebrauch machen. So kann beispielsweise der radträgerseitige Lageranbindungsbereich 6 auch in Form eines Lagerauges ausgeführt sein, welches einen umlaufenden Durchzug zum Einpressen des Gehäuses 9.1 des Kugelgelenklagers 9 aufweist.

## Patentansprüche

1. Querlenker (1) in Schalenbauweise für eine Radaufhängung, mit mindestens drei Schalenteilen, die miteinander zu einem Hohlkörper (5) verschweißt sind, der mindestens drei Lageranbindungsbereiche (6, 7, 8) aufweist, wobei die mindestens drei Schalenteile als rinnenförmige Profilschalen (2, 3, 4) ausgeführt sind, **dadurch gekennzeichnet, dass** jede der mindestens drei Profilschalen (2, 3, 4) einen äußeren, im Querschnitt betrachtet U-förmigen Kantenabschnitt (2.1, 3.1,4.1) des Hohlkörpers (5) definiert, wobei je zwei der mindestens drei rinnenförmigen Profilschalen (2, 3, 4) einen der mindestens drei Lageranbindungsbereiche (6, 7, 8) bilden.

2. Querlenker nach Anspruch 1, **dadurch gekennzeichnet, dass** die die mindestens drei Profilschalen (2, 3, 4) verbindenden Schweißnähte (12, 12', 13, 13', 14, 14') zumindest entlang eines Abschnitts ihrer Länge in einer oder mehreren neutralen Fasern des Querlenkers (1) liegen.

3. Querlenker nach Anspruch 1 oder 2, **dadurch gekennzeichnet, dass** die mindestens drei Profilschalen (2, 3, 4) im Stumpfstoß miteinander verschweißt sind.

4. Querlenker nach einem der Ansprüche 1 bis 3, **dadurch gekennzeichnet, dass** einer der Lageranbindungsbereiche in Form eines Lagerbolzens (11) ausgeführt ist, wobei zwei der mindestens drei rinnenförmigen Profilschalen (2, 3) den Lagerbolzen (11) bilden.

5. Querlenker nach Anspruch 4, **dadurch gekennzeichnet, dass** die Schweißnähte (12,12') im Bereich des Lagerbolzens (11) an dessen Oberseite und Unterseite sowie im Wesentlichen parallel zu dessen Mittelachse verlaufen.

6. Querlenker nach einem der Ansprüche 1 bis 5, **dadurch gekennzeichnet, dass** einer der Lageranbindungsbereiche, vorzugsweise ein radträgerseitiger Lageranbindungsbereich (6), in Form eines Lagerauges ausgeführt ist, welches einen umlaufenden Durchzug aufweist.

7. Querlenker nach einem der Ansprüche 1 bis 6, **dadurch gekennzeichnet, dass** mindestens zwei der mindestens drei Profilschalen (2, 3, 4) aus Metallblechen unterschiedlicher Blechdicke und/oder Materialgüte gefertigt sind.

8. Querlenker nach einem der Ansprüche 1 bis 7, **dadurch gekennzeichnet, dass** die beiden Profilschalen (3, 4), welche einen radträgerseitigen Lageranbindungsbereich (6) bilden, jeweils eine geringere Blechdicke aufweisen als eine dritte (2) der mindestens drei Profilschalen (2, 3, 4), welche sich von einem ersten karosserieseitigen Lageranbindungsbereich (8) zu einem zweiten karosserieseitigen Lageranbindungsbereich (7) erstreckt.

9. Querlenker nach einem der Ansprüche 1 bis 8, **dadurch gekennzeichnet, dass** mindestens zwei der mindestens drei Profilschalen (2, 3, 4) nach außen gebogene Randabschnitte (2.2, 2.3, 3.2, 3.3; 4.2, 4.3) aufweisen, die miteinander verschweißt sind und eine wulstförmige Erhebung (5.1, 5.2) bilden.

10. Querlenker nach einem der Ansprüche 1 bis 9, **dadurch gekennzeichnet, dass** an einem der Lageranbindungsbereiche (7) eine Lagerbuchse (10) angeordnet ist, wobei die diesen Lageranbindungsbereich (7) bildenden Profilschalen (2, 4) durch Schweißnähte (14, 14') miteinander verbunden sind, die quer zur Mittelachse der Lagerbuchse (10) verlaufen.

11. Querlenker nach einem der Ansprüche 1 bis 10, **dadurch gekennzeichnet, dass** in seinem Hohlkörper (5) eine Durchgangsöffnung (15) vorgesehen ist, an der mindestens drei, vorzugsweise mindestens sechs der die mindestens drei Profilschalen (2, 3, 4) verbindenden Schweißnähte (12, 12', 13, 13', 14, 14') enden.

12. Querlenker nach einem der Ansprüche 1 bis 11, **dadurch gekennzeichnet, dass** an einem der Lageranbindungsbereiche, vorzugsweise einem radträgerseitigen Lageranbindungsbereich (6), ein Kugelgelenklager (9) angebunden ist.

13. Querlenker nach Anspruch 12, **dadurch gekennzeichnet, dass** das Kugelgelenklager (9) ein Gehäuse (9.1)aufweist, welches mit den beiden Profilschalen (3, 4), die einen radträgerseitigen Lageranbindungsbereich (6) bilden, verschweißt ist.

14. Querlenker nach Anspruch 12 oder 13, **dadurch gekennzeichnet, dass** die beiden Profilschalen (3,4), an denen das Gehäuse (9.1) des Kugelgelenklagers (9) angebunden ist, jeweils ein im Wesentlichen flach ausgebildetes Ende (3.5, 4.5) mit einer Aufnahme für das Gehäuse (9.1) des Kugelgelenklagers (9) aufweisen, wobei die flach ausgebildeten Enden (3.5, 4.5) beabstandet voneinander mit dem Gehäuse (9.1) des Kugelgelenklagers (9) verbunden sind.

15. Querlenker nach einem der Ansprüche 1 bis 14, **dadurch gekennzeichnet, dass** der Hohlkörper (5) entlang der Schweißnähte (13, 13') der beiden Profilschalen (3, 4), welche einen radträgerseitigen Lageranbindungsbereich (6) bilden, einen gekröpften Hohlkörperabschnitt (5.4) aufweist.

## Claims

1. A transverse control arm (1) of shell construction for a wheel suspension, comprising at least three shell parts which are welded together to form a hollow body (5) which has at least three bearing connection regions (6, 7, 8), wherein the at least three shell parts are made in the form of channel-shaped profile shells (2, 3, 4), **characterised in that** each of the at least three profile shells (2, 3, 4) when considered in cross section defines an outer U-shaped edge portion (2.1, 3.1, 4.1) of the hollow body (5), wherein two of the at least three channel-shaped profile shells (2, 3, 4) each form one of the at least three bearing connection regions (6, 7, 8).

2. The transverse control arm according to claim 1, **characterized in that** the weld seams (12, 12', 13, 13', 14, 14') connecting the at least three profiled shells (2, 3, 4) lie in one or more neutral fibres of the transverse control arm (1) at least along a section of their length.

3. The transverse control arm according to claim 1 or 2, **characterized in that** the at least three profile shells (2, 3, 4) are welded together in the butt joint.

4. The transverse control arm according to one of claims 1 to 3, **characterized in that** one of the bearing connection regions is designed in the form of a bearing pin (11), two of the at least three channel-shaped profiled shells (2, 3) forming the bearing pin (11).

5. The transverse control arm according to claim 4, **characterized in that** the weld seams (12, 12') in the region of the bearing pin (11) run on its upper side and underside and essentially parallel to its central axis.

6. The transverse control arm according to one of claims 1 to 5, **characterized in that** one of the bearing connection regions, preferably a bearing connection region (6) on the wheel carrier side, is designed in the form of a bearing eye which has a circumferential eyelet.

7. The transverse control arm according to one of claims 1 to 6, **characterized in that** at least two of the at least three profiled shells (2, 3, 4) are made of metal sheets of different sheet thickness and/or material quality.

8. The transverse control arm according to one of claims 1 to 7, **characterized in that** the two profiled shells (3, 4) which form a bearing connection region (6) on the wheel carrier side each have a smaller sheet thickness than a third (2) of the at least three profiled shells (2, 3, 4), which extends from a first bearing connection region (8) on the bodywork side to a second bearing connection region (7) on the bodywork side.

9. The transverse control arm according to one of claims 1 to 8, **characterized in that** at least two of the at least three profile shells (2, 3, 4) have outwardly curved edge sections (2.2, 2.3, 3.2, 3.3, 4.2, 4.3) which are welded to one another and form a bead-shaped elevation (5.1, 5.2).

10. The transverse control arm according to one of claims 1 to 9, **characterized in that** a bearing bush (10) is arranged on one of the bearing connection regions (7), the profiled shells (2, 4) forming this bearing connection region (7) being connected to one another by weld seams (14, 14') which run transversely to the central axis of the bearing bush (10).

11. The transverse control arm according to one of claims 1 to 10, **characterized in that** a through opening (15) is provided in its hollow body (5), at which opening at least three, preferably at least six, of the weld seams (12, 12', 13, 13', 14, 14') connecting the at least three profiled shells (2, 3, 4) terminate.

12. The transverse control arm according to one of claims 1 to 11, **characterized in that** a ball joint bearing (9) is connected to one of the bearing connection regions, preferably to a bearing connection region (6) on the wheel carrier side.

13. The transverse control arm according to claim 12, **characterized in that** the ball-and-socket joint bearing (9) has a housing (9.1) which is welded to the two profiled shells (3, 4) forming a bearing connection region (6) on the wheel carrier side.

14. The transverse control arm according to claim 12 or 13, **characterized in that** the two profiled shells (3, 4) to which the housing (9.1) of the ball-and-socket bearing (9) is connected each have a substantially flat end (3.5, 4.5) with a receptacle for the housing (9.1) of the ball-and-socket bearing (9), the flat ends (3.5, 4.5) being connected to the housing (9.1) of the ball-and-socket bearing (9) at a distance from one another.

15. The transverse control arm according to one of claims 1 to 14, **characterized in that** the hollow body (5) has a cranked hollow body section (5.4) along the weld seams (13, 13') of the two profiled shells (3, 4) which form a bearing connection region (6) on the wheel carrier side.

## Revendications

1. Bras oscillant transversal (1) à structure à coque pour une suspension de roue, avec au moins trois parties de coque qui sont soudées entre elles pour former un corps creux (5), lequel présente au moins trois zones de raccordement de palier (6, 7, 8), les au moins trois parties de coque étant conçues en tant que coques profilées en forme de goulotte (2, 3, 4), **caractérisé en ce que** chacune des au moins trois coques profilées (2, 3, 4) définit une section d'arête extérieure (2.1, 3.1, 4.1) du corps creux (5), cette section d'arête extérieure (2.1, 3.1, 4.1) étant en forme de U vue en section transversale, deux des au moins trois coques profilées en forme de goulotte (2, 3, 4) formant chacune l'une des au moins trois zones de raccordement de palier (6, 7, 8).

2. Bras oscillant transversal selon la revendication 1, **caractérisé en ce que** les joints de soudure (12, 12', 13, 13', 14, 14') reliant les au moins trois coques profilées (2, 3, 4) étant situés dans une ou plusieurs fibres neutres du bras oscillant transversal (1), au moins le long d'une section de leur longueur.

3. Bras oscillant transversal selon la revendication 1 ou 2, **caractérisé en ce que** les au moins trois coques profilées (2, 3, 4) sont soudées bout à bout l'une à l'autre.

4. Bras oscillant transversal selon l'une des revendications 1 à 3, **caractérisé en ce que** l'une des zones de raccordement de palier est conçue en forme d'axe de palier (11), deux des au moins trois coques profilées en forme de goulottes (2, 3) formant l'axe de palier (11).

5. Bras oscillant transversal selon la revendication 4, **caractérisé en ce que** les joints de soudure (12, 12') passent, dans la zone de l'axe de palier (11), sur leur côté supérieur et inférieur et sensiblement parallèlement par rapport à leur axe central.

6. Bras oscillant transversal selon l'une des revendications 1 à 5, **caractérisé en ce que** l'une des zones de raccordement de palier, de préférence une zone de raccordement de palier (6) côté support de roue, est conçue en forme d'un œillet de palier qui présente un soyage périphérique.

7. Bras oscillant transversal selon l'une des revendications 1 à 6, **caractérisé en ce que** qu'au moins deux des au moins trois coques profilées (2, 3, 4) sont fabriquées à partir de tôles métalliques d'épaisseur différente et/ou de qualité des matériaux différente.

8. Bras oscillant transversal selon l'une des revendications 1 à 7, **caractérisé en ce que** les deux coques profilées (3, 4), lesquelles forment une zone de raccordement de palier (6) côté support de roue, présentent respectivement une épaisseur de tôle inférieure par rapport à une troisième (2) des au moins trois coques profilées (2, 3, 4), laquelle s'étend d'une première zone de raccordement de palier (8) côté carrosserie à une deuxième zone de raccordement de palier (7) côté carrosserie.

9. Bras oscillant transversal selon l'une des revendications 1 à 8, **caractérisé en ce qu'**au moins deux des au moins trois coques profilées (2, 3, 4) présentent des sections de bord (2.2, 2.3, 3.2, 3.3, 4.2, 4.3) pliées vers l'extérieur qui sont soudées l'une à l'autre et qui forment une élévation en forme de bourrelet (5.1, 5.2).

10. Bras oscillant transversal selon l'une des revendications 1 à 9, **caractérisé en ce qu'**un coussinet (10) est agencé sur l'une des zones de raccordement de palier (7), les coques profilées (2, 4) formant cette zone de raccordement de palier (7) étant reliées l'une à l'autre par les joints de soudure (14, 14') qui passent transversalement par rapport à l'axe central du coussinet (10).

11. Bras oscillant transversal selon l'une des revendications 1 à 10, **caractérisé en ce que** l'on prévoit dans son corps creux (5) une ouverture de passage (15), dans laquelle se terminent au moins trois, de préférence au moins six des joints de soudure (12, 12', 13, 13', 14, 14') reliant les au moins trois coques profilées (2, 3, 4).

12. Bras oscillant transversal selon l'une des revendications 1 à 11, **caractérisé en ce qu'**un palier à articulation à rotule (9) est relié à l'une des zones de raccordement de palier, de préférence à une zone de raccordement de palier (6) côté support de roue.

13. Bras oscillant transversal 12, **caractérisé en ce que** le palier à articulation à rotule (9) présente un boîtier (9.1) qui est soudé aux deux coques profilées (3, 4) qui forment une zone de raccordement de palier (6) côté support de roue.

14. Bras oscillant transversal selon la revendication 12 ou 13, **caractérisé en ce que** les deux coques profilées (3, 4) auxquelles est relié le boîtier (9.1) du palier à articulation à rotule (9) présentent respectivement une extrémité (3.5, 4.5) conçue sensiblement plate avec un logement pour le boîtier (9.1) du palier à articulation à rotule (9), les extrémités (3.5, 4.5) conçues plates étant reliées espacées l'une de l'autre au boîtier (9.1) du palier à articulation à rotule (9).

15. Bras oscillant transversal selon l'une des revendications 1 à 14, **caractérisé en ce que** le corps creux (5) présente une section de corps creux (5.4) coudée le long des joints de soudure (13, 13') des deux coques profilées (3, 4) qui forment une zone de raccordement de palier (6) côté support de roue.
